**Europäisches Patentamt**

**European Patent Office**

**Office européen des brevets**

(11) Veröffentlichungsnummer: **0 029 258**
**B1**

(12) # EUROPÄISCHE PATENTSCHRIFT

(45) Veröffentlichungstag der Patentschrift:
04.04.84

(21) Anmeldenummer: 80200931.6

(22) Anmeldetag: 02.10.80

(51) Int. Cl.³: **B 01 J 20/34,** B 01 D 53/14 //
C10K1/16, C01B3/52

(54) Vorrichtung zum Regenerieren von Waschflüssigkeit und Verfahren zu deren Betrieb.

(30) Priorität: 17.11.79 DE 2946433

(43) Veröffentlichungstag der Anmeldung:
27.05.81 Patentblatt 81/21

(45) Bekanntmachung des Hinweises auf die Patenterteilung:
04.04.84 Patentblatt 84/14

(84) Benannte Vertragsstaaten:
DE FR GB IT NL

(56) Entgegenhaltungen:
FR - A - 2 057 503
US - A - 2 804 939

(73) Patentinhaber: METALLGESELLSCHAFT AG,
Reuterweg 14 Postfach 3724, D-6000 Frankfurt/M.1 (DE)

(72) Erfinder: Grünewald, Gerhard, Dipl.-Ing., Südring 88,
D-6500 Mainz-Bretzenheim (DE)
Erfinder: Kriebel, Manfred, Dipl.-Ing., Dr.,
Tirolerstrasse 61, D-6000 Frankfurt am Main (DE)

(74) Vertreter: Fischer, Ernst, Dr., Reuterweg 14,
D-6000 Frankfurt am Main 1 (DE)

Vorrichtung zum Regenerieren von Waschflüssigkeit
und Verfahren zu deren Betrieb

Die Erfindung betrifft eine Vorrichtung zum Regenerieren von Waschflüssigkeit, die aus einer Gasreinigungszone kommt und mit gasförmigen Verunreinigungen beladen ist, in einer Stoffaustauschelemente enthaltenden Regenerationskolonne, in welcher die zu regenerierende Waschflüssigkeit bei Temperaturen von 30 bis 300°C im Gegenstrom zu von unten aufsteigendem, die Verunreinigungen aufnehmendem und abführendem Strippdampf geführt wird, wobei die Regenerationskolonne eine obere Regenerationszone und eine darunterliegende zweite Regenerationszone aufweist und jede Zone mit mindestens einer Zuführung für beladene Waschflüssigkeit und einer Ableitung für Strippdampf versehen ist. Zur Erfindung gehört auch ein Verfahren zum Betreiben der Regenerationsvorrichtung.

Vorrichtungen dieser Art sind aus FR-A-2 057 503 und US-A-2 804 939 bekannt und z. B. auch in den deutschen Patenten 1 494 806 und 1 544 080 sowie den dazu korrespondierenden US-Patenten 3 710 546 und 3 453 835 beschrieben. Bestimmte Verunreinigungen, z. B. Feststoff-Partikel oder auch entstehende unlösliche Metallverbindungen, können zu Verstopfungen der Stoffaustauschelemente führen. Bei den Stoffaustauschelementen handelt es sich etwa um bekannte Füllkörper oder flüssigkeitsdurchlässige Böden. Die Verstopfungen treten bevorzugt in dem Bereich auf, wo die beladene Waschflüssigkeit der Kolonne aufgegeben wird. Diese Verstopfungen können so weit führen, daß ein Regenerationsbetrieb wegen Undurchlässigkeit der Stoffaustauschelemente unmöglich wird und die Kolonne zur Reinigung abgeschaltet werden muß. Um in diesem Fall die Gasreinigung weiter betreiben zu können, könnte man eine zweite Regenerationskolonne bereitstellen, die zugeschaltet wird, wenn die erste Kolonne verstopft ist. Dies würde aber einen erheblichen Mehraufwand bedeuten.

Der Erfindung liegt die Aufgabe zugrunde, zum Regenerieren der Waschflüssigkeit mit einer Regenerationskolonne auszukommen, die auch beim Auftreten von Verstopfungen nicht sofort abgeschaltet werden muß. Erfindungsgemäß wird dies bei der eingangs genannten Vorrichtung dadurch erreicht, daß die Zuführungen der Regenerationszonen abschaltbar ausgebildet und die zu regenerierende Waschflüssigkeit wahlweise in die obere, abschaltbare oder die zweite Regenerationszone durch die zugehörige Zuführung einleitbar ist, daß zwischen dem unteren Ende der oberen Zone und dem oberen Ende der zweiten Zone eine Strömungsverbindung für abwärts fließende Waschflüssigkeit besteht, daß die vom oberen Ende der zweiten Regenerationszone ausgehende Ableitung für Strippdampf abschaltbar ausgebildet ist und daß das Volumenverhältnis zwischen zweiter Regenerationszone und oberer, abschaltbarer Regenerationszone mindestens etwa 1,5 : 1 beträgt. Wenn die obere Regenerationszone so weit verstopft ist, daß sie abgeschaltet werden muß, kann nunmehr auf die darunter liegende zweite Regenerationszone umgeschaltet und zu diesem Zweck die zweite Waschmittelzuführung geöffnet werden.

Durch die zusätzliche Regenerationszone in der Kolonne wird keinesfalls der gleiche bauliche Aufwand erforderlich, wie er für eine separate komplette zweite Regenerationskolonne nötig wäre. Bei der erfindungsgemäßen Vorrichtung stellt nämlich die obere, abschaltbare Regenerationszone keine vollständige Kolonne dar, sondern sie wird stets zusammen mit mindestens einem Teil der darunter liegenden Zone betrieben.

Als Regenerationszonen werden jene Bereiche der Regenerationskolonne bezeichnet, in denen Stoffaustauschelemente mit der Aufgabe des Regenerierens beladener Waschflüssigkeit vorhanden sind. Bei diesen Stoffaustauschelementen kann es sich z. B. um Füllkörper oder flüssigkeitsdurchlässige Böden handeln, die an sich bekannt sind. In der Regenerationskolonne wird die Temperatur zumeist bei 60 bis 120°C liegen und der Druck kann 0,2 bis 20 bar, vorzugsweise 1 bis 10 bar, betragen.

Jeder Regenerationszone können nicht nur eine, sondern auch zwei oder mehrere abschaltbare Zuführungen für beladenes Waschmittel zugeordnet sein. Mehrere Zuführungen sind vor allem dann nötig, wenn unterschiedlich beladene Waschmittel, die verschiedene Regenerationsvolumina benötigen, in derselben Kolonne zu regenerieren sind.

Eine Weiterbildung der Erfindung besteht darin, daß die obere, abschaltbare Regenerationszone von der zweiten Regenerationszone durch einen gas- und flüssigkeitsdichten Boden abgetrennt ist und zwischen dem unteren Ende der oberen Zone und der zweiten Zone eine Waschmittelleitung und eine Strippdampfleitung vorhanden sind. Diese beiden Leitungen können abgesperrt werden, wenn die obere Regenerationszone abgeschaltet und gereinigt wird. Während dieser Zeit kann der Regenerationsbetrieb über die zweite Zone weiterlaufen. Sofern der gas- und flüssigkeitsdichte Boden zwischen den beiden Zonen fehlt, ist ein Reinigen der oberen, abgeschalteten Zone während des Betriebs über die untere Zone nicht möglich.

Einzelheiten der Vorrichtung und ihrer Betriebsweise werden mit Hilfe der Zeichnung erläutert. Es zeigt:

Fig. 1 eine in einen Waschmittelkreislauf geschaltete Regenerationskolonne in schematischer Darstellung,

Fig. 2 eine zweite Ausführungsform einer Regenerationskolonne und

Fig. 3 eine dritte Ausführungsform einer Regenerationskolonne.

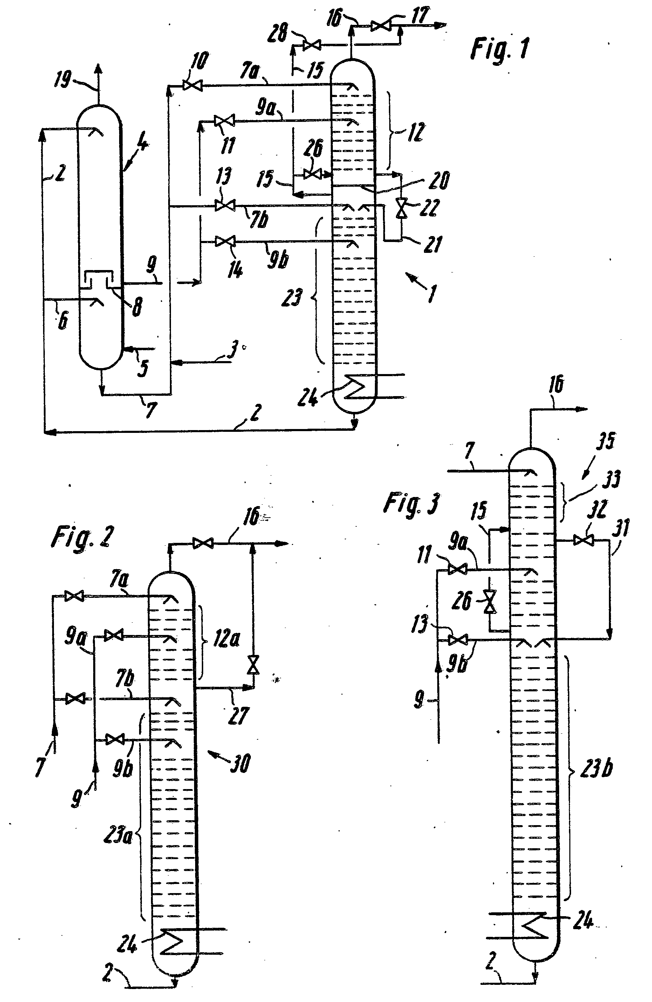

In der Anordnung der Fig. 1 wird regenerierte Waschflüssigkeit, z. B. Methanol, am unteren Ende der Regenerationskolonne 1 durch die Leitung 2 abgezogen und zum Waschturm 4 geführt. Dem Waschturm 4 wird am unteren Ende durch die Leitung 5 zu reinigendes Rohgas aufgegeben. Bei dem Rohgas kann es sich z. B. um ein Synthesegas handeln, das vor der Synthese von störenden Verunreinigungen befreit werden muß. Solche Verunreinigungen können Sauergase sein, z. B. HCN, $H_2S$, $CO_2$, COS usw.

Das Rohgas aus der Leitung 5 wird im unteren Teil des Waschturms 4 mit einem Teilstrom der regenerierten Waschflüssigkeit behandelt, der über die Leitung 6 dem Waschturm zugeführt wird. Auf diese Weise wird vor allem HCN aus dem Rohgas entfernt, wobei ein Teil der anderen Verunreinigungen von der Waschflüssigkeit ebenfalls aufgenommen wird. Die so beladene Waschflüssigkeit wird in der Leitung 7 abgezogen. Das teilweise gereinigte Gas gelangt dann von unten durch den durchlässigen Boden 8 in den oberen Bereich des Waschturms, wo die Hauptreinigung erfolgt. Hierzu dient ein zweiter Teilstrom der Waschflüssigkeit aus der Leitung 2. Die gebrauchte Waschflüssigkeit der Hauptreinigung wird durch die Leitung 9 aus dem Waschturm 4 entfernt und das Reingas strömt in der Leitung 19 ab.

Die beiden Ströme beladener Waschflüssigkeit werden über die Leitungen 7 und 7a sowie 9 und 9a bei geöffneten Ventilen 10 und 11 der oberen, abschaltbaren Regenerationszone 12 der Kolonne 1 aufgegeben. Dabei sind die Ventile 13 und 14 in den Zweigleitungen 7b und 9b geschlossen.

Das zu regenerierende Waschmittel aus den Leitungen 7a und 9a rieselt über Böden, Füllkörper oder ähnliche Stoffaustauschelemente in der oberen Regenerationszone 12 nach unten im Gegenstrom zu Strippdampf aus der Leitung 15. Das Ventil 26 ist dabei geöffnet und Ventil 28 ist geschlossen. Der Strippdampf mit Verunreinigungen verläßt die Kolonne 1 an ihrem oberen Ende über die Leitung 16 und das geöffnete Ventil 17.

Die obere Regenerationszone 12 ist keinesfalls hoch genug, um die Waschflüssigkeit vollständig regenerieren zu können. Die Waschflüssigkeit sammelt sich zunächst über dem gas- und flüssigkeitsundurchlässigen Trennboden 20 und fließt in der Waschmittelleitung 21 bei geöffnetem Ventil 22 zum oberen Ende der zweiten Regenerationszone 23. Die Leitung 22 ist als Syphon ausgebildet. Die noch einen gewissen Anteil an Verunreinigungen enthaltende Waschflüssigkeit aus der Leitung 21 fließt in der Zone 23 über Stoffaustauschelemente nach unten zur Abzugsleitung 2.

Im Sumpf der Kolonne 1 wird durch einen Erhitzer 24 ein Teil der Waschflüssigkeit, hier z. B. Methanol, verdampft und dieser Dampf als Strippdampf im Gegenstrom zur Waschflüssigkeit in der Kolonne 1 nach oben zunächst durch die Regenerationszone 23 geführt. Der Strippdampf verläßt die zweite Regenerationszone 23 über die Leitung 15 und wird, wie bereits erläutert, über das geöffnete Ventil 26 auch durch die obere Regenerationszone 12 geleitet.

Der Strippdampf kann abweichend von der Fig. 1 auch auf andere Weise erzeugt werden, wobei es sich hierbei keinesfalls nur um verdampftes Waschmittel handeln muß. Zum Strippen können auch Gase, z. B. Stickstoff, verwendet werden. Auch die Waschflüssigkeiten können ganz unterschiedlicher Art sein. Wichtig ist nur, daß sie sich durch Strippen regenerieren lassen, was z. B. für organische, physikalisch wirkende Waschmittel gilt.

Die beladenen Waschmittel in den Leitungen 7 und 9 enthalten als Verunreinigungen vielfach auch noch Metalle, wie Nickel, Vanadium, Kobalt oder Eisen. Zusammen mit den weiteren Verunreinigungen entstehen deshalb während des Regenerationsbetriebs vor allem in der Nähe der Hauptzuführungsstellen von Waschflüssigkeit Ablagerungen auf den Stoffaustauschelementen. Bestandteile solcher Ablagerungen können etwa Metallsulfide (oder komplexe Metall-Cyan-Verbindungen) sein, doch kommt es für die weiteren Erläuterungen hierauf nicht an.

Die Ablagerungen führen schließlich zu Verstopfungen, so daß der ungehinderte Durchtritt der Waschflüssigkeit und auch des Strippdampfes durch die Regenerationskolonne nicht mehr möglich ist. Wenn dieser Zustand erreicht ist, wird die obere Regenerationszone 12 abgeschaltet und zu diesem Zweck werden die Ventile 10, 11 und 22 geschlossen. Durch Öffnen der Ventile 13 und 14 werden die beiden Ströme beladener Waschflüssigkeit nun durch die Leitungen 7b und 9b der unteren Regenerationszone 23 aufgegeben. Auch das Ventil 26 wird geschlossen und der Strippdampf durch die Leitung 15 und das geöffnete Ventil 28 abgeführt. Der Verunreinigungen mit sich führende Strippdampf in den Leitungen 15 und 16 wird einer nicht dargestellten Behandlung zugeführt. Waschmittelverluste werden durch die Leitung 3 ausgeglichen.

Während die zweite Regenerationszone 23 voll in Betrieb ist, kann die abgeschaltete obere Regenerationszone 12 durch Bedienungspersonen gereinigt werden. Sollte in dieser Zeit durch knappe Auslegung der zweiten Regenerationszone 23 nur ein verringertes Regenerationsvolumen in der Kolonne 1 zur Verfügung stehen, so kann dies dadurch ausgeglichen werden, daß die Anlage mit entsprechend etwas verringerter Leistung gefahren wird. Es ist konstruktiv auch ohne weiteres möglich, z. B. durch ausreichendes Regenerationsvolumen in der zweiten Regenerationszone 23, eine solche zeitweilige Durchsatzverminderung zu vermeiden. Sobald die obere Regenerationszone 12 gereinigt ist, kann sie wieder in der erläuterten Weise in Betrieb genommen werden und auch die Anlage wieder mit voller Leistung arbeiten.

Eine gegenüber Fig. 1 abgewandelte Regenerationskolonne 30 ist in Fig. 2 dargestellt. Sie unterscheidet sich von der Kolonne 1 der Fig. 1 im wesentlichen dadurch, daß sie nicht deren Trennboden 20 zwischen oberer und unterer Regenerationszone besitzt.

Die Kolonne 30 der Fig. 2 stellt eine etwas vereinfachte Ausführungsform dar, die aber dennoch eine obere Regenerationszone 12a und eine sich darunter anschließende zweite Regenerationszone 23a aufweist. Die Grenze zwischen den beiden Zonen 12a und 23a befindet sich hier beim untersten Stoffaustauschelement oberhalb der Mündung der Leitung 7b. Weil die Kolonne 30 keinen Trennboden 20 besitzt, kann auch auf die Waschmittel führende Leitung 21 verzichtet werden, die in der Kolonne 1 der Fig. 1 notwendig ist. Die Leitungen 7a, 7b, 9a, 9b und 16 mit den zugehörigen Ventilen haben aber für die Kolonne 30 dieselben Aufgaben zu erfüllen, die bereits zusammen mit der Fig. 1 für die Kolonne 1 erläutert wurden.

Der Regenerationsbetrieb der Kolonne 30 beginnt zunächst damit, daß das beladene Waschmittel bei abgeschalteten Leitungen 7b und 9b über die geöffneten Leitungen 7a und 9a aufgegeben wird. Der Strippdampf kommt vom Erhitzer 24 am unteren Ende der Kolonne 30 und zieht durch die Leitung 16 ab. Wenn im Bereich der Mündungen der Leitungen 7a und/oder 9a störende Verstopfungen der Füllkörper oder Böden vorhanden sind, wird die Zufuhr der Waschflüssigkeit auf die Leitungen 7b und 9b umgeschaltet und die Leitungen 7a und 9a unterbrochen. Es steht danach nur noch ein verringertes Regenerationsvolumen in Form der zweiten Regenerationszone 23a zur Verfügung, so daß die Anlage zumindest aber mit verringerter Leistung weiterbetrieben werden kann. Der Strippdampf wird nun über die Leitung 27 abgeführt. Wenn schließlich nun auch noch im Bereich der Mündungen der Leitungen 7b und 9b die Stoffaustauschelemente verstopft sind, muß die ganze Kolonne 30 ihren Betrieb einstellen. Aber dadurch, daß sich in dieser Kolonne die Aufgabe der beladenen Waschflüssigkeit von einer oberen Zone auf eine darunter liegende zweite Regenerationszone umschalten läßt, kann die Laufzeit der Kolonne bis zur Abschaltung gegenüber einer einfachen Regenerationskolonne erheblich verlängert und üblicherweise etwa verdoppelt werden. Dieser enorme Vorteil wird durch einen relativ geringen zusätzlichen Aufwand erreicht.

Die Regenerationskolonne 35 der Fig. 3 ist im Unterschied zu den Kolonnen der Fig. 1 und 2 im oberen Bereich nicht vollständig abschaltbar ausgebildet, weil dies nicht in jedem Anwendungsfall notwendig ist. Die Kolonne 35 weist am oberen Ende die Abzugsleitung 16 für Verunreinigungen enthaltenden Strippdampf auf; diese Leitung bleibt auch dann in Betrieb, wenn in der Kolonne Verstopfungen auftreten.

Oberhalb der obersten Stoffaustauschelemente mündet die Waschmittelleitung 7 in die Kolonne 35. Die Leitung 7 besitzt keine Abzweigleitung, da in der Nähe ihrer Mündung keine Verstopfungen zu befürchten sind. Die Hauptmenge des zu regenerierenden beladenen Waschmittels kommt aus der Leitung 9 und wird zunächst bei geöffnetem Ventil 11 durch die Leitung 9a der Kolonne 35 aufgegeben. Die Ventile 13, 26 und 32 sind dabei geschlossen und die zugehörigen Leitungen außer Betrieb. Die Erläuterungen zu Fig. 1 gelten sinngemäß.

Wenn im Bereich der Mündung der Leitung 9a Verstopfungen in der Regenerationskolonne 35 auftreten, wird das Ventil 11 geschlossen und der Waschmittelstrom aus der Leitung 9 über das geöffnete Ventil 13 und die Leitung 9b geführt. Gleichzeitig wird das Ventil 26 der Strippdampfleitung 15 geöffnet und auch die Waschmittelleitung 31 wird durch Öffnen des Ventils 32 freigegeben. Die beiden Leitungen 15 und 31 umgehen den Verstopfungsbereich. Die jeweiligen oberen Enden der Leitungen 15 und 31 liegen in einem gewissen Abstand über der Mündung der Leitung 9a, da es sich beim Betrieb der Kolonne 35 gezeigt hat, daß auch Stoffaustauschelemente direkt über der Mündung der Waschmittel-Zufuhrleitung 9a beim Auftreten von Verstopfungen für den Regenerationsbetrieb ausfallen.

Die Kolonne 35 der Fig. 3 weist demnach folgende drei Regenerationszonen auf: 1) Die unterste Zone 23b unterhalb der Mündungen der Leitungen 9b und 31, 2) die obere abschaltbare Zone, die durch Eintritt und Austritt der Leitung 15 für den Strippdampf begrenzt ist, und 3) die Kopfzone 33 zwischen den Mündungen der Leitungen 7 und 15. Da die Kopfzone ständig in Betrieb bleibt, wird sie hier auch als »permanente Regenerationszone« bezeichnet. Bei der Kolonne 35 wird durch die Leitungen 9b, 15 und 31 nur der vermutete Bereich stärkster Verstopfung umfahren. Deshalb wird die abschaltbar ausgebildete Regenerationszone ein relativ kleines Volumen umfassen, so daß das Gesamtvolumen der Kolonne in vorteilhafter Weise klein gehalten werden kann.

### Beispiel 1

In einer Anordnung gemäß Fig. 1 wird in der nachfolgend beschriebenen Weise gearbeitet. Dabei gelten alle Volumina und Gewichtsgrößen als pro Stunde berechnet und alle Angaben in $m^3$ beziehen sich auf Normalbedingungen.

160 000 $m^3$ Synthese-Rohgas treten durch die Leitung 5 in den Waschturm 4 ein, in welchem ein Druck von 55 bar herrscht. Zur Reinigung des Rohgases wird Methanol als Waschmittel benutzt, wobei 185 $m^3$ dieses Waschmittels durch die Leitung 2 und 5 $m^3$ durch die Leitung 6 aufgegeben werden. Das Reingas in der Leitung 19 ist frei von $H_2S$ und COS. In der Leitung 7 verläßt mit Verunreinigungen beladenes Methanol den Waschturm 4.

Der Regenerationskolonne 1 werden durch die Leitung 7a 17 $m^3$ Waschmittel zugeführt, die noch 300 kg des Gasgemisches $CO_2 + H_2S$ und 100 kg Wasser enthalten. Die Hauptmenge an beladenem Waschmittel, 185 $m^3$, strömt durch

die Leitungen 9 und 9a zur Kolonne 1. Dieses Waschmittel enthält 12 000 kg gelöste Gase (70% $CO_2$ und 30% $H_2S + COS +$ Inertgas) und 1500 kg Wasser.

Zunächst sind in der Regenerationskolonne 1 beide Regenerationszonen 12 und 23 in Betrieb. Zum Strippen des beladenen Waschmittels dient Methanoldampf, der vom Erhitzer 24 mit einer Anfangstemperatur von 96°C aufsteigt. Die Regenerationszonen sind mit Tunnelböden als Stoffaustauschelemente versehen. 13 000 m³ eines methanolhaltigen Gas- und Dampfgemisches mit einer Temperatur von 75°C verlassen durch die Leitung 16 die Kolonne. Je zur Hälfte besteht das Gemisch aus Methanol und einem Gasgemisch aus $CO_2$, $H_2S$, COS und Inertgas. 190 m³ vollständig regeneriertes Methanol werden durch die Leitung 2 abgezogen und als Waschmittel wiederverwendet.

Die Regenerationskolonne hat einen lichten Durchmesser von 2,35 m, die obere abschaltbare Regenerationszone 12 ist 9 m hoch und die untere Zone 23 ist 24 m hoch. Wenn die obere Regenerationszone 12 wegen Verstopfungen abgeschaltet und das beladene Waschmittel durch die Leitungen 7b und 9b aufgegeben wird, können die Durchsatzmengen ungeändert bleiben. Diese Verstopfungen können durch Ablagerungen von Feststoff-Partikeln oder unlöslichen Metallverbindungen entstehen.

### Beispiel 2

Die Rieselkolonne 35 der Fig. 3 wird zusammen mit dem Waschturm 4 der Fig. 1 folgenderweise verwendet (auch hier sind alle Werte auf die stündlichen Mengen bezogen):

Der Kolonne 35 werden durch die Leitung 7 15 m³ und durch die Leitung 9a 170 m³ an beladenem Waschmittel (Methanol) zugeführt.

Das Methanol in der Leitung 7 am Eingang zur Kolonne enthält noch 150 kg gelöste Gase und 30 kg Wasser. Im Methanol der Leitung 9a befinden sich 3500 kg gelöste Gase ($CO_2$, $H_2S$, COS und Inertgase) und 1000 kg Wasser.

Das beladene Waschmittel diente zur Reinigung von 110 000 m³ rohem Synthesegas bei einem Druck von 55 bar. Das Synthesegas verläßt den Waschturm 4 frei von $H_2S$ und COS.

Das als Strippdampf in der Kolonne 35 verwendete Methanol hat in der Nähe des Erhitzers 24 eine Temperatur von 96°C und am Eingang der Leitung 16 eine Temperatur von 80°C. Das in der Leitung 16 abziehende Gemisch besteht zu 74 Vol.% aus Methanoldampf und der Rest sind Gase wie $CO_2$, $H_2S$, $N_2$ und CO. Vollständig regeneriertes Methanol wird in der Leitung 2 abgezogen und als Waschmittel wiederverwendet. Beim Umschalten des Regenerationsbetriebs auf die Waschmittelzufuhrleitung 9b bleiben die Durchsätze ungeändert.

Die Kolonne 35 hat einen inneren Durchmesser von 2,1 m. Die permanente Regenerationszone 33 ist 6 m hoch und genauso hoch ist die darunter liegende abschaltbare Regenerationszone. Die unterste Regenerationszone 23b hat eine Höhe von 22 m.

### Patentansprüche

1. Vorrichtung zum Regenerieren von Waschflüssigkeit, die aus einer Gasreinigungszone kommt und mit gasförmigen Verunreinigungen beladen ist, in einer Stoffaustauschelemente enthaltenden Regenerationskolonne, in welcher die zu regenerierende Waschflüssigkeit bei Temperaturen von 30 bis 300°C im Gegenstrom zu von unten aufsteigendem, die Verunreinigungen aufnehmendem und abführendem Strippdampf geführt wird, wobei die Regenerationskolonne eine obere Regenerationszone und eine darunterliegende zweite Regenerationszone aufweist und jede Zone mit mindestens einer Zuführung für beladene Waschflüssigkeit und einer Ableitung für Strippdampf versehen ist, dadurch gekennzeichnet, daß die Zuführungen abschaltbar ausgebildet und die zu regenerierende Waschflüssigkeit wahlweise in die obere abschaltbare oder die zweite Regenerationszone durch die zugehörige Zuführung einleitbar ist, daß zwischen dem unteren Ende der oberen Zone und dem oberen Ende der zweiten Zone eine Strömungsverbindung für abwärts fließende Waschflüssigkeit besteht, daß die vom oberen Ende der zweiten Regenerationszone ausgehende Ableitung für Strippdampf abschaltbar ausgebildet ist und daß das Volumenverhältnis zwischen zweiter Regenerationszone und oberer, abschaltbarer Regenerationszone mindestens etwa 1,5 : 1 beträgt.

2. Vorrichtung nach Anspruch 1, dadurch gekennzeichnet, daß jede Regenerationszone zwei abschaltbare Zuführungen für beladenes Waschmittel aufweist.

3. Vorrichtung nach Anspruch 1 oder 2, dadurch gekennzeichnet, daß die obere, abschaltbare Regenerationszone von der zweiten Regenerationszone durch einen gas- und flüssigkeitsdichten Boden abgetrennt ist und zwischen dem unteren Ende der oberen Zone und dem oberen Ende der zweiten Zone eine Leitung für aufwärts strömenden Strippdampf vorhanden ist.

4. Vorrichtung nach Anspruch 1, dadurch gekennzeichnet, daß über der oberen abschaltbaren Regenerationszone eine weitere, permanente Regenerationszone mit einer Waschmittelzuführung angeordnet ist und zwischen dem unteren Ende der permanenten Zone und dem unteren Ende der abschaltbaren Zone abschaltbare Verbindungsleitungen für abwärts fließende Waschflüssigkeit und aufwärts strömenden Strippdampf vorhanden sind.

5. Verfahren zum Betreiben der Regenerationsvorrichtung nach Anspruch 1, 2 oder 3, dadurch gekennzeichnet, daß man beladene Waschflüssigkeit zunächst in die obere, abschaltbare Regenerationszone führt, wobei bei abgeschalteter Waschflüssigkeitszuführung zur zweiten Regenerationszone die beladene Waschflüssigkeit auch durch die zweite Regenerationszone geleitet wird und beim Auftreten von Verstopfungen in der oberen Zone deren Waschflüssigkeitszuführung abgeschaltet und die Waschflüssigkeitszuführung zur zweiten Zone geöffnet wird.

6. Verfahren nach Anspruch 5 für die Regenerationsvorrichtung nach Anspruch 4, dadurch gekennzeichnet, daß beim Auftreten von Verstopfungen in der oberen abschaltbaren Regenerationszone die Waschmittelzuführung zur zweiten Regenerationszone in Betrieb genommen wird, die Waschmittelzuführung zur permanenten Zone in Betrieb bleibt und die Verbindungsleitungen für Waschmittel und Strippdampf geöffnet werden.

## Claims

1. Apparatus for regenerating liquid absorbent which is withdrawn from a gas purification zone and is laden with gaseous impurities and is regenerated in a regenerating column, which contains mass transfer-promoting elements and in which the liquid absorbent to be regenerated is conducted at temperatures of 30 to 300°C in a countercurrent to rising stripping vapor, which takes up and carries off the impurities; said regenerating column contains an upper regeneration zone and a second regeneration zone below said upper regeneration zone, each zone is provided with at least one inlet for laden liquid absorbent and an outlet for stripping vapor, characterized in that the inlets are provided with shutoff valves and the liquid absorbent to be regenerated can alternatively be fed into the upper regeneration zone or into the second regeneration zone via the corresponding inlet, the lower end of the upper zone and the upper end of the second zone are provided with a connection for downwardly flowing liquid absorbent, the outlet for stripping vapor at the upper end of the second regeneration zone is provided with a shutoff valve, and the volume ratio between the second and upper regenerating zone which can be shut down is at least about 1.5 to 1.

2. Apparatus according to claim 1, characterized in that each regenerating zone is provided with two shutoff valvecontrolled inlets for feeding laden liquid absorbent.

3. Apparatus according to claim 1 or 2, characterized in that the upper regenerating zone which can be shut down is separated from the second regenerating zone by a gas- and liquid-impermeable plate and a conduit for rising stripping vapor is provided between the lower end of the upper zone and the upper end of the second zone.

4. Apparatus according to claim 1, characterized in that a permanent regenerating zone provided with an inlet for liquid absorbent is disposed above the upper regenerating zone which can be shut down, and shutoff valve-controlled transfer conduits for liquid absorbent flowing downwardly and rising stripping vapor are provided between the lower end of the permanent zone and the lower end of the zone which can be shut down.

5. A method of operating the regenerating apparatus according to claim 1, 2 or 3, characterized in that laden liquid absorbent is initially fed to the upper regenerating zone which can be shut down and the laden liquid absorbent is passed also through at least part of the second regenerating zone while the absorbent inlet of the second regeneration zone is shut off, and that the supply of liquid absorbent to the upper zone is shut off and the liquid absorbent is fed to the second zone when the upper zone has become obstructed.

6. A method according to claim 5 for the regenerating apparatus according to claim 4, characterized in that the liquid absorbent is fed to the second regenerating zone, the supply of liquid absorbent to the permanent zone is continued, and the transfer conduits for liquid absorbent and stripping vapor are opened when the upper regenerating zone which can be shut down has become obstructed.

## Revendications

1. Dispositif de régénération de liquide de lavage, qui provient d'une zone d'épuration de gaz et qui est chargé d'impuretés sous forme gazeuse, dans une colonne de régénération, qui contient des éléments d'échange de matière et dans laquelle le liquide de lavage à régénérer est envoyé, à des températures de 30 à 300°C, à contre-courant de vapeur d'entraînement ascendante à partir du bas et qui absorbe et évacue les impuretés, la colonne de régénération présentant une zone supérieure de régénération et une seconde zone de régénération sous-jacente, et chaque zone étant munie d'au moins une entrée pour du liquide de lavage chargé et d'une sortie pour de la vapeur d'entraînement, caractérisé en ce que les entrées sont agencées de manière à pouvoir être débranchées et le liquide de lavage à régénérer peut être envoyé, au choix, par l'entrée correspondante, dans la zone de régénération supérieure qui peut être débranchée ou dans la seconde zone de régénération, en ce que, entre l'extrémité inférieure de la zone supérieure et l'extrémité supérieure de la seconde zone, il y a une communication pour l'écoulement vers le bas du liquide de lavage, en ce que la sortie pour la vapeur d'entraînement, issue de l'extrémité supérieure de la seconde zone de régénération, peut être débranchée et en ce que le rapport en volume entre la seconde zone de régénération et la zone supérieure de régénération, pouvant être débranchée s'élève au moins à environ 1,5 : 1.

2. Dispositif suivant la revendication 1, caractérisé en ce que chaque zone de régénération présente deux amenées pour de l'agent de lavage chargé, qui peuvent être débranchées.

3. Dispositif suivant la revendication 1 ou 2, caractérisé en ce que la zone supérieure de régénération, pouvant être débranchée est séparée de la seconde zone de régénération par un plateau étanche aux gaz et aux liquides, et entre l'extrémité inférieure de la zone supérieure et l'extrémité supérieure de la seconde zone, il y a un conduit pour de la vapeur d'entraînement ascendante.

4. Dispositif suivant la revendication 1, caractérisé en ce que, au-dessus de la zone de régénération supérieure, pouvant être débranchée, est disposée une autre zone de régénération permanente, ayant une entrée pour de l'agent de lavage, et entre l'extrémité inférieure de la zone permanente et l'extrémité inférieure de la zone pouvant être débranchée, il y a des conduits de mise en communication pouvant être débranchés et destinés au liquide de lavage s'écoulant vers le bas et à de la vapeur d'entraînement ascendante.

5. Procédé pour faire fonctionner le dispositif de régénération suivant la revendication 1, 2 ou 3, caractérisé en ce qu'il consiste à envoyer du liquide de lavage chargé d'abord dans la zone de régénération supérieure pouvant être débranchée, puis, alors que l'entrée pour le liquide de lavage dans la seconde zone de régénération est débranchée, à envoyer le liquide de lavage chargé également dans la seconde zone de régénération et, lorsqu'il se produit des engorgements dans la zone supérieure, à débrancher son entrée pour le liquide de lavage, et à ouvrir l'entrée dans la seconde zone pour le liquide de lavage.

6. Procédé suivant la revendication 5 pour le dispositif de régénération selon la revendication 4, caractérisé en ce qu'il consiste à mettre en fonctionnement, lorsqu'il se produit des engorgements dans la zone supérieure de régénération, pouvant être débranchée, l'entrée dans la seconde zone de régénération pour l'agent de lavage, à laisser en fonctionnement l'entrée dans la zone permanente pour l'agent de lavage, et à ouvrir les conduits de mise en communication pour l'agent de lavage et pour la vapeur d'entraînement.

Fig. 1

Fig. 2

Fig. 3